# EUROPEAN PATENT SPECIFICATION

(11) **EP 1 532 085 B1**
(45) Date of publication and mention of the grant of the patent: **12.11.2008**
(21) Application number: 03716506.5
(22) Date of filing: 12.03.2003
(51) Int. Cl.: C04B 35/83, C25B 11/12, C04B 35/52, C04B 35/532

(54) **PROCESS OF MAKING CARBON ELECTRODES**
VERFAHREN ZUR HERSTELLUNG VON ELEKTRODEN AUS KOHLENSTOFF
PROCESSUS DE FABRICATION D'ELECTRODES EN CARBONE

(30) Priority: 27.08.2002 US 406146 P
(43) Date of publication of application: 25.05.2005
(73) Proprietor: GrafTech International Holdings Inc., Parma, OH 44130 (US)
(72) Inventor: SHAO, Richard, Liichang, North Royalton, OH 44133 (US); KORTOVICH, James, William, Strongsville, OH 44136 (US); LEWIS, Irwin, Charles, Strongsville, OH 44136 (US); LEWIS, Richard, Thomas, Auburn, OH 44023 (US); PIRRO, Terrence A, Cleveland, OH 44111 (US)
(74) Representative: Brand, Thomas Louis
(86) International application number: PCT/US2003/007618
(87) International publication number: WO 2004/020365

(56) References cited:
- GB-A- 1 434 824
- GB-A- 1 548 046
- US-A- 5 607 770

## Description

### TECHNICAL FIELD

The present invention relates to carbon electrodes, and a process for preparing the inventive carbon electrodes. More particularly, the invention concerns carbon electrodes, such as graphite electrodes, formed by processing a blend of calcined coke, pitch and carbon fibers.

### BACKGROUND ART

Carbon electrodes, especially graphite electrodes, are used in the steel industry to melt the metals and other ingredients used to form steel in electrothermal furnaces. The heat needed to melt metals is generated by passing current through a plurality of electrodes, usually three, and forming an arc between the electrodes and the metal. Currents in excess of 100,000 amperes are often used. The resulting high temperature melts the metals and other ingredients. Generally, the electrodes used in steel furnaces each consist of electrode columns, that is, a series of individual electrodes joined to form a single column. In this way, as electrodes are depleted during the thermal process, replacement electrodes can be joined to the column to maintain the length of the column extending into the furnace.

Generally, electrodes are joined into columns via a pin (sometimes referred to as a nipple) that functions to join the ends of adjoining electrodes. Typically, the pin takes the form of opposed male threaded sections, with at least one end of the electrodes comprising female threaded sections capable of mating with the male threaded section of the pin. Thus, when each of the opposing male threaded sections of a pin are threaded into female threaded sections in the ends of two electrodes, those electrodes become joined into an electrode column. Commonly, the joined ends of the adjoining electrodes, and the pin there between, are referred to in the art as a joint.

Given the extreme thermal stress that the electrode and the joint (and indeed the electrode column as a whole) undergo, mechanical factors such as thermal expansion must be carefully balanced to avoid damage or destruction of the electrode column or individual electrodes. For instance, longitudinal (i.e., along the length of the pin/electrode/electrode column) thermal expansion of the pin, especially at a greater rate than that of the electrodes, can force the joint apart, reducing effectiveness of the electrode column. A certain amount of transverse (i.e., across the diameter of the pin/electrode/electrode column) thermal expansion of the pin in excess of that of the electrodes may be desirable to form a firm connection between pin and electrode; however, if the transverse thermal expansion of the pin greatly exceeds that of the electrode, damage to the electrode may result, in the form of cracking or splitting. Again, this can result in reduced effectiveness of the electrode column, or even destruction of the column if the damage is so severe that a joint fails. Thus, control of the thermal expansion of an electrode and a pin, in both the longitudinal and transverse directions, is of paramount importance.

There have been references to the use of mesophase pitch-based carbon fibers to improve specific properties of bulk graphite products such as electrodes. For instance, Singer, in U.S. Pat. No. 4,005,183, describes the production of mesophase pitch-based fibers and states that, because of their low electrical resistivity, these fibers can be employed as filler material in the production of graphite electrodes. In British Patent 1,526,809 to Lewis and Singer, 50% to 80% by weight of carbon fibers are added to 20% to 50% by weight of pitch binder and then extruded to form a carbon artifact that can be graphitized. The resulting article exhibits relatively low longitudinal thermal expansion.

In U. S. Pat. No. 4,998, 709, Griffin et al. attempt to address the problems caused by excessive longitudinal thermal expansion of electrode pins by preparing a graphite nipple (i.e., pin) with mesophase pitch-based carbon fibers included in the extrusion blend. The carbon fibers used by Griffin et al. have a Young's modulus of greater than 379.225GPa (55x 10⁶ pounds per square inch (psi)), and are present in the blend at about 8 to 20 weight percent. The blend is extruded, baked, and then graphitized for from about 5 to 14 days to produce the nipple. Although nipples produced by the Griffin et al. process show a decrease in the coefficient of thermal expansion (CTE) in the longitudinal direction, they also show an undesirable increase in CTE in the transverse direction, an increase in electrical resistivity and a decrease in the modulus of rupture. In addition, the graphitizing time is extremely long compared with times that would be advantageous for commercial production.

What are desired, therefore, are carbon electrodes having reduced CTE in the longitudinal direction as compared with art-conventional electrodes, without sacrificing transverse CTE or resistivity and modulus of rupture. Especially desirable is such an electrode that is prepared by a process that does not require 5 days of graphitization. It is also highly desirable to achieve these property benefits without using high quantities of expensive materials.

US-A-5,607,770 discloses a unitary composite structure comprising a heterogeneous combination of a carbonaceous reinforcing material interbonded with a matrix material, the said matrix material being a poorly graphitizing carbonaceous pitch containing polymerized and cross-linked aromatic components. The document also discloses graphite electrodes comprised of the poorly graphitized pitch matrix material acting as a binder and/or an impregnant and further discloses processes for the preparation of the poorly graphitizing pitch, the composite structure, and particularly the graphite electrodes.

GB-A-1,434,824 discloses carbon artifacts suitable for use as an electrode, which are produced by mixing together a carbonizable binder, calcined coke grist produced from a solution or extract of coal, and between 1 and 40% of carbon fibers based on the weight of the coke grist. The fibers are randomly dispersed by mixing at a temperature at which the binder is a liquid, finally the mixture is shaped and carbonized, and optionally graphitized. Both the carbon fibers and binder may be prepared from a solution or extract of coal.

The present invention provides a process for preparing carbon electrodes and electrodes as defined in the claims.

The inventive electrodes also have improved toughness as compared to the conventional electrodes.

It is yet another aspect of the present invention to provide a process for preparing carbon electrodes, the electrodes having reduced longitudinal coefficient of thermal expansion as compared to art-conventional electrodes, without substantial sacrifice of transverse CTE or resistivity while also increasing the modulus of rupture.

It is still another aspect of the present invention to provide a process for preparing carbon electrodes, the electrodes having reduced longitudinal coefficient of thermal expansion as compared to art-conventional electrodes, wherein the process requires graphitization times significantly shorter than 5 days.

These aspects and others that will become apparent to the artisan upon review of the following description can be accomplished by providing a process for preparing carbon electrodes, the process comprising (a) combining a filler material, a pitch binder and carbon fibers derived from mesophase pitch or PAN, said fibers having an average length of from 4.25 mm to 82.55 mm (1/6 to "3.25"), to form an electrodestock blend; (b) extruding the electrodestock blend to form a green electrodestock; (c) baking the green electrodestock to form a carbonized electrodestock; and (d) graphitizing the carbonized electrodestock by maintaining the carbonized electrodestock at a temperature of at least 2500. degree. C., to form an electrode.

In the inventive process, the carbon fibers are preferably present at a level of about 0.5 to about 10 parts by weight of carbon fibers per 100 parts by weight of calcined coke, or at about 0.4% to about 10% by weight of the total mix components, an average diameter of about 6 to about 15 microns, and a length of from about 4.23 mm to 82.55 mm (1/6" to 3.25"). Most advantageously, the carbon fibers are added to the electrodestock blend as bundles, each bundle containing from about 2000 to about 20,000 fibers. The baking of the green electrodestock preferably takes place at a temperature of up to about 700 to about 1000.degree.C. in a non-oxidizing or reducing environment, and graphitization is more preferably at a temperature of from about 2500 to about 3400.degree.C.

As noted above, carbon electrodes (carbon electrodes is used herein to include at least graphite electrodes and cathodes) could be fabricated by first combining calcined coke, pitch and mesophase pitch-based carbon fibers into an electrodestock blend. More specifically, crushed, sized and milled calcined petroleum coke is mixed with a coal-tar pitch binder to form the blend. The particle size of the calcined coke is selected according to the end use of the electrode, and is within the skill in the art. Generally, in graphite electrodes for use in processing steel, particles up to about 25 millimeters (mm) in average diameter are employed in the blend. Other ingredients that may be incorporated into the blend at low levels include iron oxides to inhibit puffing (caused by release of sulfur from its bond with carbon inside the coke particles) and oils or other lubricants to facilitate extrusion of the blend.

Also included in the blend are carbon fibers derived from either mesophase pitch or PAN(polyacrylonitrile). Such fibers are produced from pitch that has been at least partially transformed to a liquid crystal, or so-called mesophase, state. The fibers used should advantageously have a Young's modulus (after carbonization) of at least about 103.425GPa (15×10⁶ psi), more typically at least 137.900GPa (20×10⁶ psi). In one certain embodiment, the Young's modulus of the fiber is less than about 379.225GPa (55×10⁶ psi). They preferably have an average diameter of about 6 to about 15 microns, a tensile strength of at least about 1.379GPa (200×10³ psi), and are preferably about from about 4.23 mm to 82.55 mm (1/6" to 3.25") is lengh or average. Suitable lengths of fiber include an average length of about 6.35 mm (¼") or less, about 12-7mm (½") less, about 14.05mm (¾") or less, about 25.4mm (1") or less, 31.75mm (1.25") or less, 38.1(1.5'') or less, 50.8 mm (2'') or less, 63.5mm (2.5') or less, and 76.2mm (3.0") or less. In one embodiment, it is also preferred that the carbon fibers are not longer than the biggest coke particle. Most advantageously, the fibers are added to the blend as bundles containing between about 2000 and about 20,000 fibers per bundle, compacted with the use of a sizing. The fibers are not required to be individually dispersed into the blend, consequently, the fibers may be maintained in the form of one or more bundles.

As noted, the carbon fibers to be included in the blend are based on mesophase itch or PAN. Mesophase pitch can be prepared from feedstocks such as heavy aromatic petroleum streams, ethylene cracker tars, coal derivatives, petroleum thermal tars, fluid cracker residues and pressure treated aromatic distillates having a boiling range from 340.degree. C. to about 525.degree. C. The production of mesophase pitch is described in, for example, U.S. Pat. No. 4,017,327 to Lewis et al., the disclosure of which is incorporated herein by reference. Typically, mesophase pitch is formed by heating the feedstock in a chemically inert atmosphere (such as nitrogen, argon, xenon, helium or the like) to a temperature of about 350.degree. C. to 500.degree. C. A chemically inert gas can be bubbled through the feedstock during heating to facilitate the formation of mesophase pitch. For preparation of carbon fibers, the mesophase pitch should have a softening point, that is, the point at which the mesophase pitch begins to deform, of less than 400.degree. C. and usually less than about 350.degree. C. If the pitch has a higher softening point, formation of carbon fibers having the desired physical properties is difficult.

One method of making the PAN fibers comprises spinning the fibers from a solution ofpolyacrylonitrile. The fibers are then stabilized in the same manner as are the mesophase based fibers. For additional background regarding PAN based fibers, pages 119-123 of Carbon Materials for Advanced Technologies is incorporated herein by reference.

Once the mesophase pitch is prepared, it is spun into filaments of the desired diameter, by known processes such as by melt spinning, centrifugal spinning, blow spinning or other processes which will be familiar to the skilled artisan. Spinning produces carbon fibers suitable for use in preparing the electrode of the present invention. The filaments are then thermoset at a temperature no higher than the softening point of the pitch (but usually above 250.degree. C.) for about 5 to 60 minutes, then further treated at extremely high temperatures, on the order of up to about 1000.degree. C. and higher, and in some cases as high as about 3000.degree. C. more typically about 1500.degree. C. to 1700.degree. C., to carbonize the fibers. The carbonization process takes place in an inert atmosphere, such as argon gas, for at least about 0.5 minutes. Most commonly, carbonization uses residence times of between about 1 and 25 minutes. The fibers are then cut to length and formed into bundles. Such fibers, bundled as described, are commercially available from BP/Amoco Company of Alpharetta, Ga. and Mitsubishi Chemical Company of Tokyo, Japan.

The carbon fibers are preferably included in the blend at a level of about 0.5 to about 10 parts by weight of carbon fibers per 100 parts by weight of calcined coke, in one certain embodiment, up to 6 parts by weight of carbon fibers per 100 parts by weight of calcined coke. Most preferably, the fibers are present at a level of about 1.25 to about 5 parts by weight fibers per 100 parts by weight of coke. In terms of the blend as a whole, the carbon fibers are incorporated at a level of about 1% to about 10% by weight, more preferably about 1.5% to up to about 6%, even more preferably, about 5% or less.

In the case of a cathode, the coke is not limited to a calcined coke, preferred cokes include petroleum coke, coal derived coke, and combinations of these cokes. The manufacture of the cathode may also include anthracite coal instead of the coke or along with the coke.

After the blend of calcined coke, pitch binder, carbon fibers, etc. is prepared, the electrode body is formed (or shaped) by extrusion though a die or molded in conventional forming molds to form what is referred to as a green electrodestock. The forming, whether through extrusion or molding, is conducted at a temperature close to the softening point of the pitch, usually about 100.degree. C. or higher. Although the die or mold can form the electrode in substantially final form and size, machining of the finished electrode is usually needed, at the very least to provide threads, which may be preferred to mate with a pin to from an electrode column. As would be apparent, the electrodes are sized so as to have a diameter suitable to receive the pin to join the electrodes to form the electrode column. Typically, the pins have a diameter that is about 30% to about 60% of the diameter of the electrode. Thus, for electrodes whose diameter can vary between about 38.1 cm and 76.2cm (15 and 30 inches), the pins have a diameter of about 11.43cm to about 45.72cm (4.5 to about 18 inches). With respect to cathodes, cathodes do not necessarily have a circular circumference. The circumference of the cathode may be rectangular instead of circular.

After extrusion, the green electrodestock is heat treated by baking at a temperature of between about 700.degree. C. and about 1100.degree. C., more preferably between about 800.degree. C. and about 1000.degree. C., to carbonize the pitch binder to solid coke, to give the electrode permanency of form, high mechanical strength, good thermal conductivity, and comparatively low electrical resistance. The green electrodestock is baked in the relative absence of air to avoid oxidation. Baking should be carried out at a rate of about 1.degree. C. to about 5.degree. C. an hour to the final temperature. After baking, the electrode may be impregnated one or more times with coal tar or petroleum pitch, or other types of pitches known in the industry, to deposit additional pitch coke in any open pores of the electrode. Each impregnation is then followed by an additional baking step. Preferably the electrode is only impregnated one time with such pitch.

After baking, the electrode, referred to at this stage as carbonized electrodestock, is then graphitized. Graphitization is by heat treatment at a final temperature of between about 2500.degree. C. to about 3400.degree. C. for a time sufficient to cause the carbon atoms in the calcined coke and pitch coke binder to transform from a poorly ordered state into the crystalline structure of graphite. Advantageously, graphitization is performed by maintaining the carbonized electrodestock at a temperature of at least about 2700.degree. C., and more advantageously at a temperature of between about 2700.degree. C. and about 3200.degree. C. At these high temperatures, elements other than carbon are volatilized and escape as vapors. The time required for maintenance at the graphitization temperature using the process of the present invention is no more than about 18 hours, indeed, no more than about 12 hours. Preferably, graphitization is for about 1.5 to about 8 hours.

As noted, once graphitization is completed, the finished electrode can be cut to size and then machined or otherwise formed into its final configuration. Typically, the electrode has an internal section that is axially tapered from an end to a lengthwise middle portion to receive the pin, and then threads are machined into the tapered portion of the electrode, to permit mating with corresponding threads of the pin, to form the electrode column. Given its nature, the graphite permits machining to a high degree of tolerance, thus permitting a strong connection between pin and electrode.

The electrodes prepared in accordance with the present invention exhibit a substantial reduction in longitudinal CTE as compared with electrodes prepared without carbon fibers. The electrodes show an increase in flexural strength (i.e., modulus of rupture) and an increase in Young's modulus, without a concomitant significant increase in transverse CTE or specific resistance, without the requirement of commercially disadvantageous graphitization times. The carbon fibers are not required to be uniformly or randomly dispersed within the electrode. In one certain embodiment, the fibers may be substantially maintained in the form of bundles.

The following examples are presented to further illustrate and explain the present invention and should not be viewed as limiting in any regard. Unless otherwise indicated, all parts and percentages are by weight, and are based on the weight of the product at the particular stage in processing indicated

### EXAMPLE 1

A trial was conducted with additions of fibers from Mitsubishi Chemical (mesophase pitch fibers, 1.78cm (0.7") long chopped bundles, having a Young's modulus of 1723.75 GPa (25x10⁶ psi) and a tensile strength of 17927GPa (260 x 10³ Kpsi), BP Amoco (mesophase pitch fibers, 6.35cm (0.25") and 2.54cm (1.0") long chopped bundles, designated as P-25 with a Young's modulus of 1585-85 GPa (23x10⁶ psi) and a tensile strength of 15375.85 GPa (223x10³ kpsi), and Zoltek (PAN based fibers, designated as Pancex 33CF having a Young's modulus of 2275.35 GPa (33 x 10⁶ psi) and a tensile strength of 2275.35 GPa (33 x 10³ kpsi), 2.54cm (1") long chopped bundles). The concentration of the fiber bundles in the mix was between about 2.5 to about 5 weight percent. The pastes were prepared in a paddle arm, cylinder mixer, cooled, and extruded to about 150 mm × about 330 mm long electrodes. The electrodes were processed as described above. The physical properties of the electrodes with fibers are compared to those of control electrodes (no fibers) below.

**TABLE I**

| | **Properties of Cylinder Mixed Electrodes With Fiber Additions** | | | | | |
|---|---|---|---|---|---|---|
| | **Density** | **Resistance** | **Modulus** | **Flex Str** | **Long CTE** | **Trans CTE** |
| | **(g/cm³)** | **(µΩm)** | **(psix10⁶)** | **(psi)** | **(1/°Cx10⁻⁶)** | **(1/°Cx10⁻⁶)** |
| | | | | | | |
| **Without fibers** | **1.692** | **5.52** | **1.41** | **1511** | **0.29** | **1.36** |
| | | | | | | |
| **Mitsubishi, 0.7", 2.5%** | **1.689** | **5.57** | **1.57** | **1700** | **0.18** | **1.38** |
| **Mitsubishi, 0.7", 5%** | **1.693** | **5.45** | **1.73** | **1907** | **0.007** | **1.45** |
| | | | | | | |
| **Amoco, 0.25", 2%** | **1.705** | **5.79** | **1.56** | **1652** | **0.21** | **1.41** |
| **Amoco, 0.25", 4%** | **1.710** | **5.52** | **1.78** | **1926** | **0.12** | **1.43** |
| | | | | | | |
| **Amoco, 1.0", 2.5%** | **1.686** | **5.56** | **1.54** | **1715** | **0.18** | **1.39** |
| | | | | | | |
| **Zoltek, 1.0", 2%** | **1.710** | **5.60** | **1.53** | **1574** | **0.19** | **1.47** |

The electrodes with fibers had equal or higher density, equal or only slightly higher electrical resistance, higher modulus and strength, and lower longitudinal coefficient of thermal expansion than electrodes without fibers. The improvements were better with mesophase pitch fiber additions than with PAN based fiber additions.

### EXAMPLE 2

A second trial was conducted with additions of fibers from Mitsubishi Chemical (mesophase pitch fibers 30.48mm (1.2") long chopped bundles), Zoltek (PAN based fibers, 5.08cm (2") long chopped bundles), BP Amoco (mesophase pitch fibers, 6.35mm (0.25") and (1") long chopped bundles), and Conoco (mesophase pitch fibers, 25.4mm (1") long chopped mat). Addition levels of the fiber bundles was about 1.5 and about 3 weight percent. The pastes were prepared in a double arm, Sigma blade mixer, cooled, and extruded to about 150 mm x about 330 mm long electrodes. The electrodes were processed as described above. The physical properties of the electrodes with fibers are compared to those of control electrodes (no fibers) below.

| | | | | **TABLE II** | | | |
|---|---|---|---|---|---|---|---|
| | | | | | | | |
| | | **Properties of Sigma Mixed Electrodes With Fiber Additions** | | | | | |
| | | | | | | | |
| | | **Density** | **Resistance** | **Modulus** | **Flex Str** | **Long CTE** | **Trans CTE** |
| | | **(g/cm³)** | **(µΩm)** | **(psix10⁶)** | **(psi)** | **(1/°Cx10⁶)** | **(1/°Cx10⁻⁶)** |
| | | | | | | | |
| **Without Fibers** | | **1.658** | **5.98** | **1.18** | **1340** | **0.40** | **1.32** |
| | | | | | | | |
| **Mitsubishi, 1.2", 1.5%** | | **1.656** | **5.87** | **1.40** | **1515** | **0.21** | **1.25** |
| **Mitsubishi, 1.2", 3%** | | **1.625** | **5.94** | **1.40** | **1624** | **0.08** | **1.15** |
| | | | | | | | |
| **Zoltek, 2.0", 1.5%** | | **1.654** | **5.97** | **1.40** | **1686** | **0.26** | **1.29** |
| **Zoltek, 2.0", 3%** | | **1.634** | **5.85** | **1.42** | **1756** | **0.16** | **1.20** |
| | | | | | | | |
| **Amoco, 0.25", 1.5%** | | **1.641** | **6.12** | **1.33** | **1531** | **0.23** | **1.18** |
| **Amoco, 0.25", 3%** | | **1.611** | **6.01** | **1.38** | **1667** | **0.11** | **1.17** |
| | | | | | | | |
| **Amoco, 1.0", 1.5%** | | **1.627** | **6.27** | **1.23** | **1488** | **0.23** | **1.22** |
| **Amoco, 1.0", 3%** | | **1.624** | **6.00** | **1.41** | **1706** | **0.10** | **1.16** |
| | | | | | | | |
| **Conoco,1.0",1.5%** | | **1.648** | **6.07** | **1.32** | **1458** | **0.21** | **1.19** |
| **Conoco, 1.0", 3%** | | **1.620** | **5.85** | **1.40** | **1560** | **0.04** | **1.14** |

Again, the electrodes with fibers had equal or higher density, equal or only slightly higher electrical resistance, higher modulus and strength, and lower coefficient of thermal expansion (both longitudinal and transverse) than electrodes without fibers. The strength improvements were better with either mesophase pitch or PAN based fiber chopped bundle additions than with addition of the Conoco chopped mat.

### EXAMPLE 3

A third trial was conducted with additions of the fibers from Mitsubishi Chemical only (mesophase pitch fibers 6.35mm (0.25") long chopped bundles), the same fibers as used in U.S. Patent 6,280,663. Addition levels were 2, 4, and 6 weight percent. The pastes were again prepared in the paddle arm, cylinder mixer, cooled, and extruded to 150 mm × 330 mm long electrodes. The electrodes were processed as described above. The physical properties of the electrodes with fibers are compared to those of control electrodes (no fibers) below.

| | | | | **TABLE III** | | | |
|---|---|---|---|---|---|---|---|
| | | | | | | | |
| | | **Properties of Cylinder Mixed Electrodes With Fiber Additions** | | | | | |
| | | | | | | | |
| | | **Density** | **Resistance** | **Modulus** | **Flex Str** | **Long CTE** | **Trans CTE** |
| | | **(g/cm³)** | **(µΩm)** | **(psix10⁶)** | **(psi)** | **(1/°Cx10⁶)** | **(1/°Cx10⁶)** |
| | | | | | | | |
| **Without Fibers** | | **1.685** | **5.25** | **1.22** | **1323** | **0.25** | **1.24** |
| | | | | | | | |
| M**itsubishi, 0.25", 2%** | | **1.692** | **5.07** | **1.44** | **1534** | **0.11** | **1.21** |
| | | | | | | | |
| **Mitsubishi, 0.25", 4%** | | **1.685** | **5.12** | **1.52** | **1676** | **0.06** | **1.24** |
| | | | | | | | |
| **Mitsubishi, 0.25", 6%** | | **1.684** | **5.13** | **1.59** | **1715** | **-0.01** | **1.15** |

Property trends from the first two examples were duplicated. The strength/modulus increase began to level off at the 6 per cent fiber loading level. A longitudinal CTE of zero was achieved.

### COMPARISON OF FIBER LEVEL/TYPE AND STRENGTH/CTE IMPROVEMENT

The table below shows the strength and CTE changes for the various types and amounts of fibers investigated.

| | | | **TABLE IV** | | | |
|---|---|---|---|---|---|---|
| | **Property Changes Versus Fiber Type/Amount** | | | | | |
| | | | | | | |
| | | | | | | |
| | | | | **Strength** | **Long CTE** | **Trans CTE** |
| **Example** | **Fiber** | **Length** | **Per Cent** | **Increase** | **Change** | **Change** |
| | | **(inches)** | | **(%)** | **(1/°Cx10⁻⁶)** | **(1/°Cx10⁻⁶)** |
| | | | | | | |
| **3** | **Mitsubishi** | **0.25** | **2.0** | **16.0** | **-0.14** | **-0.04** |
| **3** | **Mitsubishi** | **0.25** | **4.0** | **26.5** | **-0.19** | **0.01** |
| **3** | **Mitsubishi** | **0.25** | **6.0** | **30.0** | **-0.25** | **-0.09** |
| | | | | | | |
| **1** | **Mitsubishi** | **0.70** | **2.5** | **12.5** | **-0.11** | **0.02** |
| **1** | **Mitsubishi** | **0.70** | **5.0** | **26.2** | **-0.22** | **0.09** |
| | | | | | | |
| **2** | **Mitsubishi** | **1.20** | **1.5** | **13.0** | **-0.19** | **-0.07** |
| **2** | **Mitsubishi** | **1.20** | **3.0** | **21.0** | **-0.32** | **-0.17** |
| | | | | | | |
| | | | | | | |
| **1** | **Amoco** | **0.25** | **2.0** | **9.3** | **-0.08** | **0.05** |
| **1** | **Amoco** | **0.25** | **4.0** | **27.5** | **-0.17** | **0.07** |
| | | | | | | |
| **2** | **Amoco** | **0.25** | **1.5** | **14.0** | **-0.17** | **-0.14** |
| **2** | **Amoco** | **0.25** | **3.0** | **24.0** | **-0.29** | **-0.15** |
| | | | | | | |
| **2** | **Amoco** | **1.00** | **1.5** | **11.0** | **-0.17** | **-0.10** |
| **2** | **Amoco** | **1.00** | **3.0** | **27.0** | **-0.30** | **-0.16** |
| | | | | | | |
| **1** | **Amoco** | **1.00** | **2.5** | **13.5** | **-0.11** | **0.03** |
| | | | | | | |
| **1** | **Conoco** | **1.00** | **1.5** | **9.0** | **-0.19** | **-0.12** |
| **1** | **Conoco** | **1.00** | **3.0** | **16.0** | **-0.36** | **-0.18** |

The results were relatively consistent between the three trials and the various fiber types. The strength increase and CTE reduction can be controlled by the amount of fiber depending either on the severity of the application or the quality of lower cost cokes available for upgrade. The fiber type can be selected based on considerations such as handling, dispersion, and economics.

The above description is intended to enable the person skilled in the art to practice the invention. It is not intended to detail all of the possible variations and modifications that will become apparent to the skilled worker upon reading the description. It is intended, however, that all such modifications and variations be included within the scope of the invention that is defined by the following claims. The claims are intended to cover the indicated elements and steps in any arrangement or sequence that is effective to meet the objectives intended for the invention, unless the context specifically indicates the contrary.

## Claims

1. A process for preparing carbon electrodes, the process comprising:
(a) combining a filler material, a pitch binder and carbon fibers derived from mesophase pitch or PAN, said fibers having an average length of from from 4.23mm to 82.55mm (1/6" to 3.25") to form an electrodestock blend, wherein the carbon fibers are present at a level of 0.5 to 10 parts by weight of carbon fibers per 100 parts by weight of filler material;
(b) extruding the electrodestock blend to form a green electrodestock;
(c) baking the green electrodestock to form a carbonized electrodestock; and
(d) graphitizing the carbonized electrodestock by maintaining the carbonized electrodestock at a temperature of at least 2500.degree.C., to form an electrode; and
(e) selecting the amount of carbon fibre with reference to the filler material so as to control the longitudinal coefficient of thermal expansion (CTE) of the electrode.

2. A process according to claim 1, wherein said carbonized electrodestock is maintained at said temperature of at least 2500.degree.C. for no more than 18 hours.

3. A process according to claim 1 or claim 2, wherein said filler material comprises at least one of calcined coke, petroleum coke, coal derived coke, anthracite coal and combinations thereof.

4. A process according to claim 3, wherein said filler material comprises calcines coke.

5. A process according to any one of claims 1 to 4, wherein the carbon fibers have a tensile strength of at least 1.03425 GPa (150,000 psi).

6. A process according to any one of claims 1 to 5, wherein the carbon fibers have a Young's modulus of 103.425GPa (15×10⁶ psi).

7. A process according to any one of claims 1 to 6 for preparing a carbon cathode, wherein the electrodestock is a cathodestock.

8. A process according to any one of claims 1 to 7, wherein the carbon fibers are derived from mesophase pitch.

9. A cathode comprising a filler, wherein said filler comprises at least one of calcinated coke, petroleum coke, coal derived coke, anthracite coal, and combinations thereof, a pitch binder and carbon fibers derived from mesophase pitch, said fibers having an average length of from 4.23mm to 82.55mm (1/6 "to 3.25"), wherein the carbon fibers are present at a level of 0.5 to 10 parts by weight of carbon fibers per 100 parts by weight of filler material, the electrode exhibiting a reduction is longitudinal CTE as compared in the electrodes prepared without carbon fibres.

10. A carbon electrode according to claim 9, comprising calcined coke, a liquid pitch binder and carbon fibers derived from mesophase pitch, said fibers having an average length of from 4.23mm to 82.55mm (1/6 "to 3.25").

11. A carbon electrode according to claim 10, wherein a concentration of said fiber comprises about 10.0% or less of a total mix of components.

12. An electrode produced by a process according to any one of claims 1 to 8.

## Patentansprüche

1. Verfahren zur Herstellung von Kohleelektroden, das die folgenden Schritte beinhaltet:
(a) Kombinieren eines Füllmaterials, eines Pechbindemittels und von Mesophasen-Pech oder PAN gewonnenen Kohlenstofffasern, wobei die genannten Fasern eine durchschnittliche Länge von 4,23 mm bis 82,55 mm (1/6" bis 3,25") haben, um eine Elektrodenvorratsmischung zu bilden, wobei die Kohlenstofffasern in einem Anteil von 0,5 bis 10 Gewichtsteilen Kohlenstofffasern je 100 Gewichtsteile Füllmaterial vorliegen,
(b) Extrudieren der Elektrodenvorratsmischung, um einen grünen Elektrodenvorrat zu bilden,
(c) Brennern des grünen Elektrodenvorrats, um einen karbonisierten Elektrodenvorrat zu bilden, und
(d) Graphitieren des karbonisierten Elektrodenvorrats durch Halten des karbonisierten Elektrodenvorrats auf einer Temperatur von wenigstens 2500 °C, um eine Elektrode zu bilden, und
(e) Auswählen der Kohlenstofffasermenge mit Bezug auf das Füllmaterial, um den longitudinalen Wärmeausdehnungskoeffizienten (CTE) der Elektrode zu regeln.

2. Verfahren nach Anspruch 1, wobei der genannte karbonisierte Elektrodenvorrat auf der genannten Temperatur von wenigstens 2500 °C nicht länger als 1 8 Stunden gehalten wird.

3. Verfahren nach Anspruch 1 oder Anspruch 2, wobei das genannte Füllmaterial kalzinierten Koks und/oder Petrolkoks, von Kohle gewonnenen Koks, Anthrazitkohle und Kombinationen davon umfasst.

4. Verfahren nach Anspruch 3, wobei das genannte Füllmaterial kalzinierten Koks umfasst.

5. Verfahren nach einem der Ansprüche 1 bis 4, wobei die Kohlenstofffasern eine Zugfestigkeit von wenigstens 1,03425 GPa (150.000 psi) haben.

6. Verfahren nach einem der Ansprüche 1 bis 5, wobei die Kohlenstofffasern ein Youngsches Modul von 103,425 GPa (15 x 10⁶ psi) haben.

7. Verfahren nach einem der Ansprüche 1 bis 6 zur Herstellung einer Kohlekathode, wobei der Elektrodenvorrat ein Kathodenvorrat ist.

8. Verfahren nach einem der Ansprüche 1 bis 7, wobei die Kohlenstofffasern von Mesophasen-Pech stammen.

9. Kathode, umfassend einen Füllstoff, wobei der genannte Füllstoff kalzinierten Koks und/oder Petrolkoks, von Kohle gewonnenen Koks, Anthrazitkohle und Kombinationen davon umfasst, ein Pechbindemittel und von Mesophasen-Pech gewonnene Kohlenstofffasern, wobei die genannten Fasern eine durchschnittliche Länge von 4,23 mm bis 82,55 mm (1/6" bis 3,25") haben, wobei die Kohlenstofffasern in einem Anteil von 0,5 bis 10 Gewichtsteilen Kohlenstofffasern je 100 Gewichtsteile Füllmaterial vorliegen, wobei die Elektrode einen Rückgang des longitudinalen CTE im Vergleich zu Elektroden aufweist, die ohne Kohlenstofffasern hergestellt werden.

10. Kohleelektrode nach Anspruch 9, die kalzinierten Koks, ein flüssiges Pechbindemittel und von Mesophasen-Pech gewonnene Kohlenstofffasern umfasst, wobei die genannten Fasern eine durchschnittliche Länge von 4,23 mm bis 82,55 mm (1/6" bis 3,25") haben.

11. Kohleelektrode nach Anspruch 10, wobei eine Konzentration der genannten Faser etwa 10,0 % oder weniger eines Komponentengesamtgemischs umfasst.

12. Elektrode, die durch ein Verfahren nach einem der Ansprüche 1 bis 8 produziert wird.

## Revendications

1. Processus de préparation d'électrodes en carbone, le processus comprenant :
(a) la combinaison d'une matière de remplissage, d'un liant de poix et de fibres de carbone dérivées de poix mésophase ou PAN, lesdites fibres ayant une longueur moyenne de 4,23 mm à 82,55 mm (1/6" à 3,25") afin de former un mélange de matière à électrode, dans lequel les fibres de carbone sont présentes à raison de 0,5 à 10 parties en poids de fibres de carbone pour 100 parties en poids de matière de remplissage ;
(b) l'extrusion du mélange de matière à électrode afin de former une matière à électrode brute ;
(c) la cuisson de la matière à électrode brute afin de former une matière à électrode carbonisée : et
(d) le graphitage de la matière à électrode carbonisée en maintenant la matière à électrode carbonisée à une température d'au moins 2500 degrés C, afin de former une électrode ; et
(e) la sélection de la quantité de fibres de carbone relativement à la matière de remplissage, de façon à contrôler le coefficient longitudinal de dilatation thermique (CTE) de l'électrode.

2. Processus selon la revendication 1, dans lequel ladite matière à électrode carbonisée est maintenue à ladite température d'au moins 2500 degrés C pendant 18 heures maximum.

3. Processus selon la revendication 1 ou la revendication 2, dans lequel ladite matière de remplissage comprend au moins l'un de coke calciné, de coke de pétrole, de coke dérivé du charbon, de charbon anthracite et de combinaisons de ceux-ci.

4. Processus selon la revendication 3, dans lequel ladite matière de remplissage comprend du coke calciné.

5. Processus selon l'une quelconque des revendications 1 à 4, dans lequel les fibres de carbone ont une résistance à la traction d'au moins 1,03425 GPa (150000 psi).

6. Processus selon l'une quelconque des revendications 1 à 5, dans lequel les fibres de carbone ont un module d'élasticité de Young de 103,425 GPa (15x10⁶ psi).

7. Processus selon l'une quelconque des revendications 1 à 6 pour préparer une électrode de carbone, dans lequel la matière à électrode est une matière à cathode.

8. Processus selon l'une quelconque des revendications 1 à 7, dans lequel les fibres de carbone sont dérivées de poix mésophase.

9. Cathode comprenant un agent de remplissage, dans lequel ledit agent de remplissage comprend au moins l'un de coke calciné, de coke de pétrole, de coke dérivé du charbon, de charbon anthracite et de combinaisons de ceux-ci, un liant de poix et des fibres de carbone dérivées de poix mésophase, lesdites fibres ayant une longueur moyenne de 4,23 mm à 82,55 mm (1/6" à 3,25"), dans lequel les fibres de carbone sont présentes à raison de 0,5 à 10 parties en poids de fibres de carbone pour 100 parties en poids de matière de remplissage, l'électrode présentant une réduction du coefficient de dilatation thermique longitudinale en comparaison aux électrodes préparées sans fibres de carbone.

10. Electrode de carbone selon la revendication 9, comprenant du coke calciné, un liant de poix liquide et des fibres de carbone dérivées de poix mésophase, lesdites fibres ayant une longueur moyenne de 4,23 mm à 82,55 mm (1/6" à 3,25").

11. Electrode de carbone selon la revendication 10, dans laquelle une concentration de ladite fibre comprend environ 10,0% ou moins d'un mélange total des composants.

12. Electrode produite par un processus selon l'une quelconque des revendications 1 à 8.
